# EUROPEAN PATENT SPECIFICATION

(11) **EP 0 868 662 B1**
(45) Date of publication and mention of the grant of the patent: **12.03.2003**
(21) Application number: 96942502.4
(22) Date of filing: 19.12.1996
(51) Int. Cl.: G01N 27/40

(54) **MICROMACHINED ION PERMEABLE COMPOSITE MEMBRANES FOR AMPEROMETRIC ION DETECTION**
MIT MIKROPROCESS HERGESTELLTE IONENDURCHLÄSSIGE VERBUNDMEMBRAN FÜR AMPEROMETRISCHE MESSUNGEN
MEMBRANES COMPOSITES MICRO-USINEES, PERMEABLES AUX IONS POUR LA DETECTION IONIQUE AMPEROMETRIQUE

(30) Priority: 19.12.1995 GB 9525921
(43) Date of publication of application: 07.10.1998
(73) Proprietor: ECOLE POLYTECHNIQUE FEDERALE DE LAUSANNE, 1015 Lausanne (CH)
(72) Inventor: BEATTIE, Paul, Daniel, Burnaby, British Columbia V5A 1C2 (CA); BREVET, Pierre-François, CH-1041 Saint-Barthélemy (CH); GIRAULT, Hubert, Hughes, CH-1088 Ropraz (CH); OSBORNE, Murray, Douglas, Willaston South Wirral L64 2XH (GB); SEDDON, Brian, Jeffrey, CH-1414 Rueyres (CH)
(74) Representative: Manaton, Ross Timothy
(86) International application number: GB9603149
(87) International publication number: WO97022875

(56) References cited:
- EP-A- 0 103 031
- US-A- 4 484 987
- PATENT ABSTRACTS OF JAPAN vol. 14, no. 195 (P-1039), 20 April 1990 & JP 88 188995 A (DENKI KAGAKU KEIKI CO LTD.), 8 February 1990,
- ELECTROCHIMICA ACTA, vol. 39, no. 6, 1994, GB, pages 783-791, XP000646625 B. J. SEDDON: "THE APPLICATION OF EXCIMER LASER MICROMACHINING FOR THE FABRICATION OF DISC MICROELECTRODES "
- ANALYTICAL SCIENCES, vol. 3, December 1987, pages 521-526, XP000646661 TOSHIYUKI OSAKAI: "A NOVEL AMPEROMETRIC AMMONIA SENSOR" cited in the application
- ELECTROANALYSIS, vol. 7, no. 8, July 1995, pages 714-721, XP000646641 M. D. OSBORNE: "THE LIQUID-LIQUID MICRO-INTERFACE FOR THE AMPEROMETRIC DETECTION OF UREA" cited in the application

## Description

This invention relates to micromachined ion permeable composite membranes for the amperometric detection and quantitation of ionic species. Detection systems of the invention are applied to flow analysis and disposable ion sensing devices in clinical diagnostics and heavy metal analysis.

In the past, ion sensing membranes and transducers in the form of glass membranes and organic polymer membranes have been the major electrochemical routes for the potentiometric analysis of non-redox ionic species [1]. One common type of potentiometric probe is the glass pH electrode, which incorporates thin glass membranes, and which is used for monitoring the concentration of H⁺ ions. Other membranes have been developed for a wide range of monovalent cations. The glass membranes can optionally be modified by the inclusion of hydrophobic layers to design electrodes which can specifically detect gases such as CO₂ or NH₃ [2].

These modes of ion sensing have the particular advantage of being easy to perform, but suffer from having only moderate response times of the order of several minutes or longer. The time taken to reach a steady signal is often dependent on the rate of mass transport to the surface of the sensing membrane. Further drawbacks with the potentiometric membranes are that improvements in selectivity in the presence of interfering ions can only be achieved by using elaborate ionophores such as valinomycin, which, with time, can leach out of the membrane. Furthermore, ion selective electrodes (ISE) and ion selective field effect transistors (ISFET) display a logarithmic potential-concentration response characteristic of at most 60mV and 30mV per decade of concentration for monovalent and divalent ions, respectively. Therefore electrical noise of only a few millivolts can hinder the accuracy of the measurement. The limited precision of these type of devices also manifests itself as electrode signal drift when operated in solutions other than those defined by the manufacturer, often giving rise to variable matrix effects as a consequence.

Amperometric ion measurement techniques have several advantages over the traditional potentiometric methods. The measurement of a current signal (as a result of an ion or electron transfer process or reaction at a polarised interface between immiscible liquids) is directly proportional to the concentration of the analyte under study, and the current-time response characteristics are often of the order of seconds. Sensing probes consisting of interfaces between two immiscible liquids or between a liquid and a gel can for example be used for the amperometric monitoring of ion concentrations. Ion transfer processes and reactions through such interfaces are diffusion controlled and as such all the electroanalytical methodology developed for solid electrodes can be directly applied [3].

The interface formed with aqueous solutions and viscous hydrophobic gel materials have, for example, been used in ion sensing experiments. However, it has been found that the inherent poor electrical conductivity combined with the poor mechanical stability of these gel formulations has thus far restricted their use in experimental and sensor design [3-6]. Efforts to reduce the resistivity and to improve the mechanical stability of the gel materials have been made. For example, resistivities have been diminished by inclusion in the gel solvent of high concentrations of ionic substances such as organic electrolytes. However, the high electrical resistances associated with the aforementioned gels remain, and consequently influence the form and quantitative value of the electroanalytical signal (measured signal is visibly distorted by the effects of the large 5 ohmic drop). The reliable identification and determination of ionic species by the principle of ion transfer at polarised polymeric interfaces (including the water to organic gel interface) thus requires the development of a novel approach to membrane design in order to alleviate the aforementioned limitations.

We have now found that the problems associated with slab, layered and film hydrophobic gels are overcome by incorporation of a microstructured layer within a composite membrane. This design feature, which defines a regular microscopic interfacial area of well characterised geometries, produces preferentially spherical diffusion fields and concentration gradients. The microscopic nature of such mass transport fields yield a significantly diminished ohmic loss resulting from the flow of pico-ampere and nano-ampere currents. The invention therefore provides, in one aspect, a micromachined ion permeable composite membrane comprising: a non-polarisable layer having at least one microaperture formed therethrough; and an electrically polarisable material comprising a polymer matrix, into which a predetermined ionic species is capable of entering, the polarisable material being disposed in relation to said at least one microaperture so as to provide a passageway of well defined cross-sectional area for said predetermined ionic spieces through the interface between the composite membrane and a sample with which the membrane is placed in contact.

Definition of the membrane structure into specific and well-defined geometric patterns may be achieved for example by UV laser photoablation or chemical etching procedures, which in effect expose parts of the polarisable material (i.e. plasticised polymer or organic gel) of the composite membrane. Such composite membranes have a number of possible applications in disposable ion sensing systems, flow injection analysis systems and immunochromatographic systems [7-10]. Also the incorporation of such composite membranes according to the invention in a probe-like assembly, in a similar manner to a potentiometric ISE, could lead to a marketable amperometric version of an ISE probe for a number 5 of ion transferable species of interest in clinical diagnosis. An "ion transferable" species is herein defined as an ionic substance which moves from one liquid or gel phase to another by virtue of an applied electrical potential difference across the interfacial region. The transfer phenomenon is by its nature potential specific and as such introduces a high degree of selectivity to the ion sensing system. The response characteristics of the ion permeable composite membranes of the invention as analytical transducers to determine ionic concentrations have proved to be superior to those previously described, in terms of specificity, sensitivity, limit of detection, speed of response, accuracy and precision.

In electrochemical sensors incorporating composite membranes according to the invention, the sensing component of the invention (i.e. the polarisable material), can detect and quantitate metal and molecular ions by the principle of ion transfer from the sample into the polarisable material by electric polarisation. Ion transfer currents generated by this movement of ionic species can be measured by the composite membrane transducer and are only very weakly influenced by the composite membrane resistance effects, thus significantly reducing the applied signal distortions and improving the measurement characteristics. Chemical transducers and devices consisting of the composite membranes as sensing components exhibit a high degree of selectivity for complex samples. For example, the device signal for the detection of cations remains unaffected by the presence of potentially interfering urate and ascorbate ions in clinical samples (e.g. whole blood, diluted blood fractions, serum and plasma), even when these ions are present at concentrations as high as 700µM.

The ionic response of the composite membrane (i.e. the ion transfer current) varies in direct proportion to the ion concentration of the transferable species in the sample (clinical or otherwise). The ion transfer currents flow with diffusion control and are extremely well defined because the diffusion fields are generated by the specific micromachining of the non-polarisable layer. This precision machined microstructure yields constant currents for a given analyte concentration in electroanalytical techniques such as cyclic voltammetry and chronoamperometry. This unique diffusion field characteristic [7-10] ultimately gives the composite membrane transducer fast signal response times where the measured responses possess high signal to noise ratios. The measured signals manifest themselves as steady state voltammetric or amperometric waves, which offer several important advantages for analytical determination of ionic substances.

The invention is hereinafter described in more detail by way of example only, with reference to the accompanying drawings, in which the micromachined apertures of the illustrated embodiment are arranged in regular arrays of micro circular holes or discs. It should be stressed that other geometries are also applicable to the invention, where one of the dimensions lies on the micrometer scale, for example microsquare, microhexagon, microstrip or microband, etc.

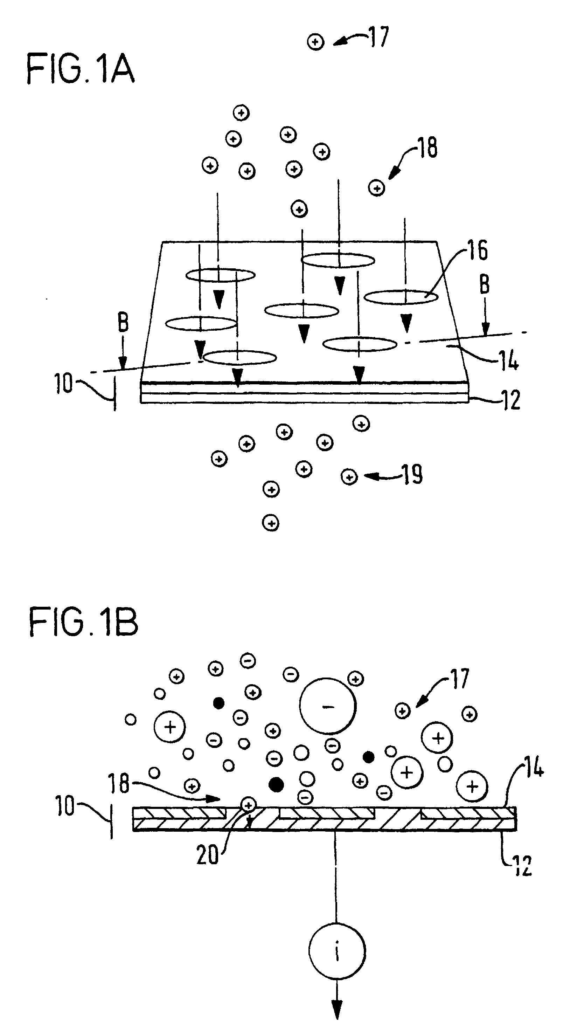

Figure 1A is a perspective schematic view of an embodiment of micromachined ion permeable composite membrane according to the invention, wherein the reference numerals indicate: (17) water phase or sample, (18) ion transferable species, (16) micro-interfacial region, (14) non-polarisable layer, (12) polarisable layer, (19) transferred ionic species, (10) micromachined ion permeable composite membrane.

Figure 1B is a sectional schematic view, taken along line B-B of Figure 1A; wherein the reference numerals indicate: (17) water phase, (14) non-polarisable layer, (12) polarisable layer, (18) ion transferable species, (20) depiction of, for example, cationic transfer from a water phase to the polarisable layer, (10) micromachined ion permeable composite membrane.

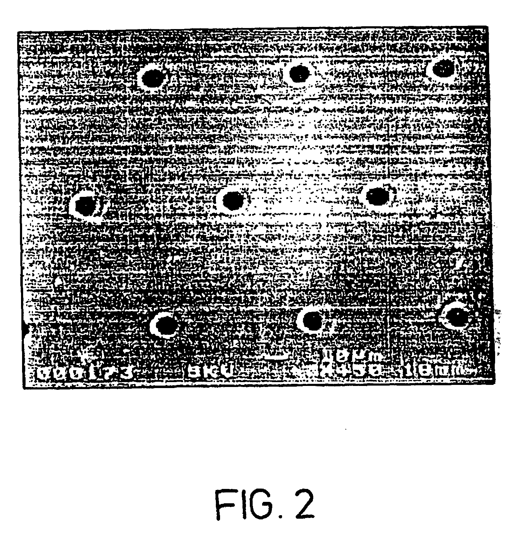

Figure 2 is a scanning electron micrograph showing the micro aperture array of an embodiment of composite membrane of the same general type as that illustrated in Figures 1A and 1B.

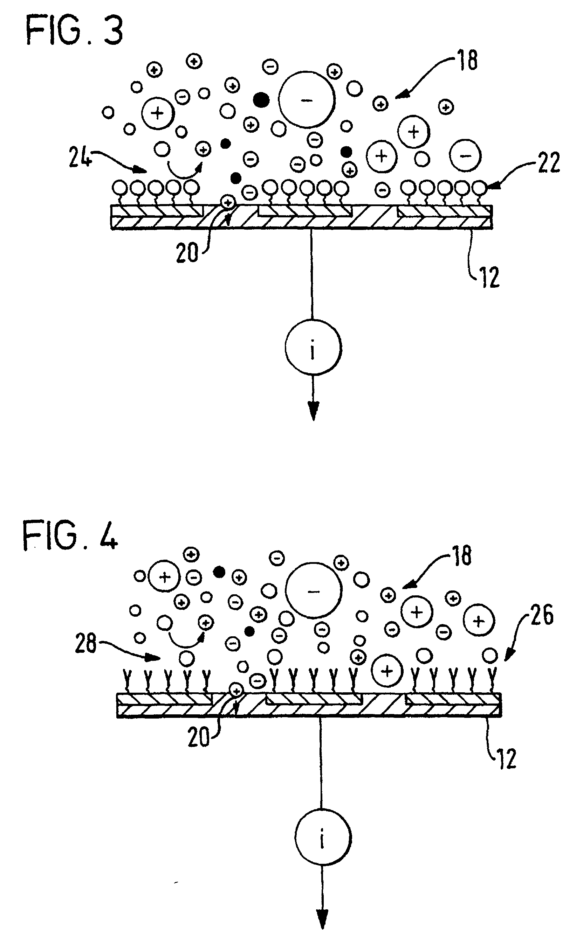

Figure 3 is a sectional schematic view of an embodiment of micromachined ion permeable composite membrane similar to that shown in Figure 1B, but having an immobilised enzyme layer, wherein the reference numerals indicate: (18) the sample, (12) polarisable layer, (22) immobilised enzyme, (24) depiction of the enzyme reaction showing the production of an ion transferable species from a non-transferable or non-interfering chemical species, (20) depiction of ionic transfer as in Figure 1.

Figure 4 is a sectional schematic view of an embodiment of micromachined ion permeable composite membrane similar to that shown in Figure 1B, but having an immobilised immunochemical reagent layer, wherein the reference numerals indicate: (18) the sample, (12) polarisable layer, (26) immobilised immunochemical reagent such as an antibody, an antibody fragment or an antigenic entity or substance, (28) depiction of an enzyme marker reaction showing the production of an ion transferable species from a non-transferable or non-interfering chemical species, (20) depiction of ionic transfer as in Figure 1.

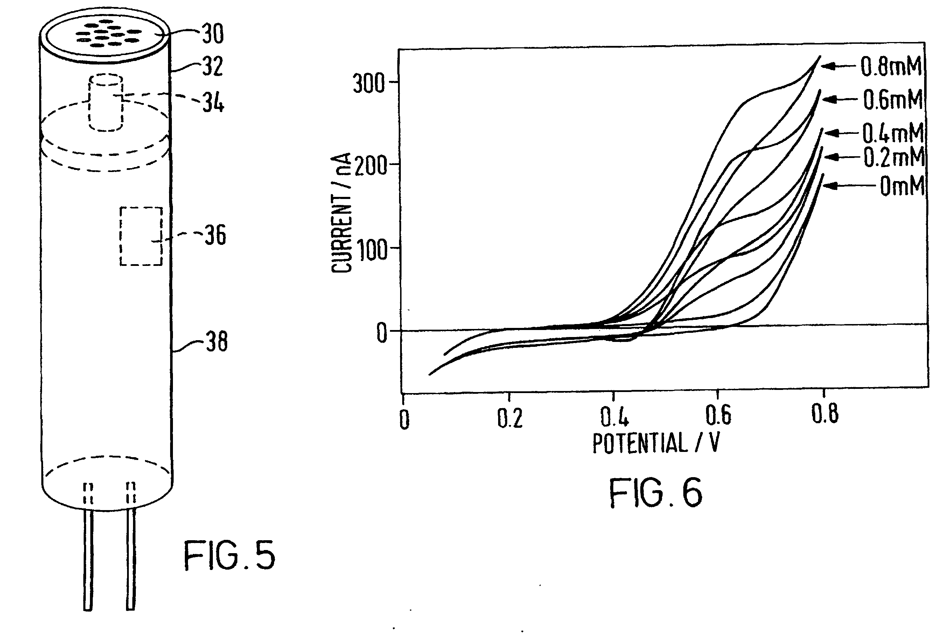

Figure 5 is a perspective diagrammatic view of an embodiment of probe sensor incorporating a micromachined ion permeable composite membrane according to the invention, wherein the reference numerals indicate: (30) the ion permeable composite membrane, (32) replaceable tip holding the composite membrane, (34) internal probe compartment holding a reference electrode and internal electrolyte solution or gel, (36) external reference electrode, (38) body of the probe sensor.

Figure 6 is a series of cyclic voltammograms obtained from the transfer of choline across an embodiment of ion permeable composite membrane according to the invention, (This figure clearly demonstrates the advantages of the present invention over the response of devices with large interfaces as shown in Figure 5 of reference [6]. The invention provides improvements in ohmic polarisation and measurement precision with greatly reduced background currents.).

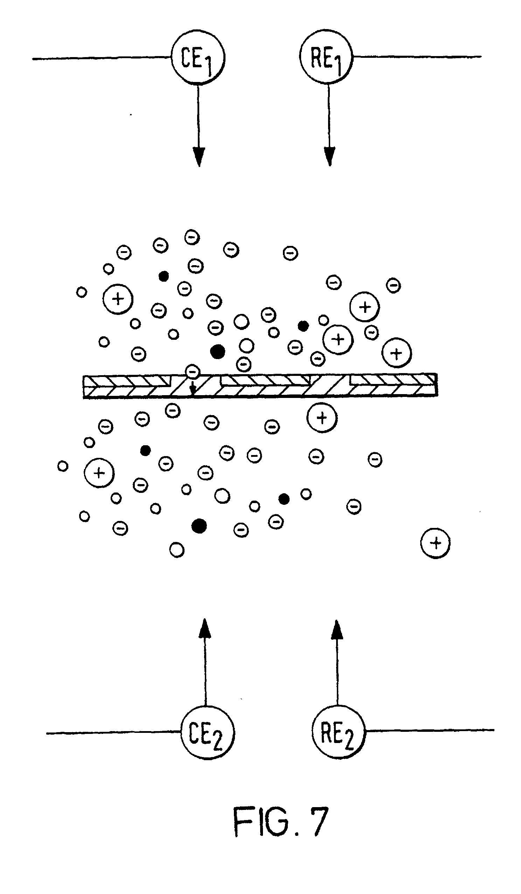

Figure 7 is a sectional schematic view of an embodiment of micromachined ion permeable composite membrane similar to that shown in Figure 1B, and illustrates an ion sensing arrangement wherein the composite membrane of the invention lies between two electrolyte compartments (aqueous or otherwise) holding separate reference electrodes RE1 and RE2 respectively and current measuring electrodes CE1 and CE2 respectively.

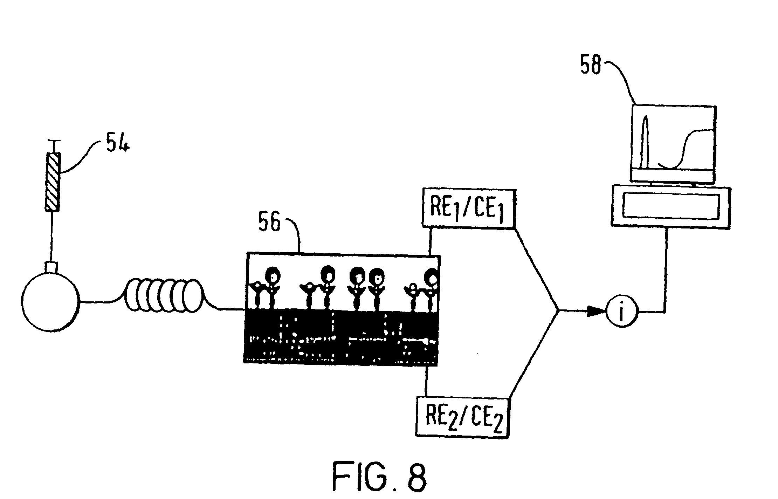

Figure 8 is a schematic view of the embodiment of composite membrane shown in Figures 1 to 5, used as the detection system in a flow analysis apparatus, in which the reference numerals indicate: (54) injector, (56) detector, and (58) electrochemical workstation.

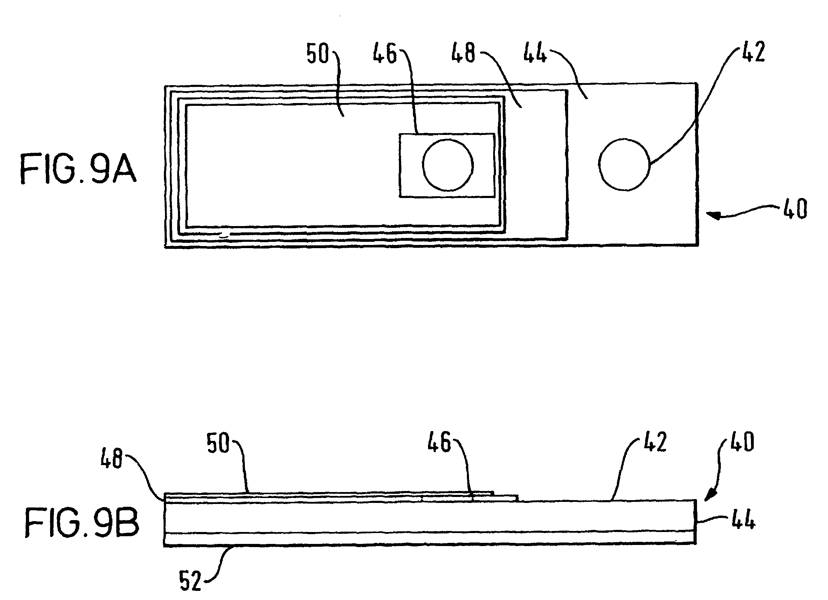

Figures 9A and 9B are, respectively, a plan view and a side view of an embodiment of disposable sensor incorporating a composite membrane of the type illustrated in Figures 1 to 5 as part of the detection system. The embodiment shown comprises an immunochromatography strip, wherein the reference numerals indicate: (40) immunochromatography strip, (42) sample window with enzyme conjugate, (44) a transfer membrane containing assays reagents, (46) detector region, (48) non-polarisable layer, (50) reference electrode such as printed silver-silver chloride ink film for the polarisable layer, (52) reference electrode such as printed silver-silver chloride ink film for the sample solution.

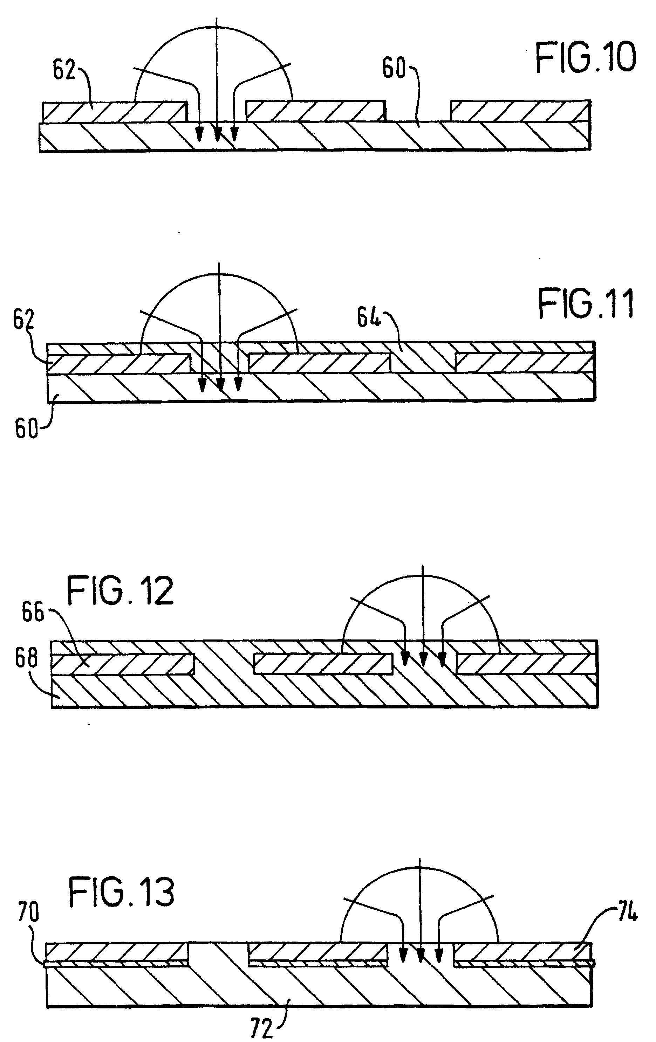

Figure 10 is a schematic sectional view of an embodiment of membrane according to the invention, in which the polarisable layer (60) does not fill the apertures in the non-polarisable layer (62).

Figure 11 is a schematic sectional view of an embodiment of membrane according to the invention, corresponding to Figure 10, but in which the non-polarisable layer is covered by a protective layer (64).

Figure 12 is a schematic sectional view of a further embodiment of membrane according to the invention, in which the non-polarisable layer (66) is embedded within the polarisable layer (68).

Figure 13 is a schematic sectional view of a yet further alternative embodiment of membrane according to the invention, in which an electrically conductive layer (70) is disposed between the polarisable (72) and non-polarisable (74) layers.

Referring to figures 1A and 1B, micromachined ion permeable composite membrane 10 is composed of hydrophobic ion-sensitive layer 12 and hydrophilic non-polarisable layer 14. An array of U.V. excimer machined micro-pores 16 is formed in non-polarisable layer 14 (see also Figure 2), to reveal portions of the underlying ion-sensitive layer 12. In operation the ionic analyte of interest 18 moves towards the composite membrane 10 as a result of interfacial polarisation of the membrane with respect to the sample solution, and diffusion of the ions through the exposed portions of the ion polarisable layer 16 gives rise to a measurable and well defined amperometric signal (*i*).

The composite membranes may be manufactured by several fabrication routes. One such approach is the lamination of a non-polarisable film (for example a polyester) with a film of the polarisable material (such as a PVC composite). This layer can be applied as an extremely thin film with micrometer thicknesses, but because of the operational requirements of the micromachined composite membrane system it is not essential to have such high fabrication control over this film thickness. The polarisable layer may be applied over the complete surface of the non-polarisable layer, here referred to as the support material, or at selected sites thereon. Film-forming hydrophobic polymers can be used to make the polarisable layer and can be applied to the support material by several filming methods, for example extrusion coating, casting from solvents, spread filming, applying as gelled laminated film, spray coating, ink-jet printing or screen printing.

The polarisable and non-polarisable laminate may then be subjected to a laser drilling or photolithographic etching process to open up apertures (either single apertures or an array of apertures) in the non-polarisable layer. Alternatively, the micromachining of the non-polarisable layer can be carried out prior to hydrophobic polymer lamination. This procedure exposes microscopic regions of the polarisable material and defines the chemical sensing geometry of the membrane. If desired, the non-polarisable material can be pre-conditioned or surface treated by laser hydrophilisation methods in order to alter the chemical character of the surface, for example to alter the hydrophilic state of the surface. These treatments are particularly preferred steps where biochemicals such as enzymes or antibodies are to be immobilised on the surface of the non-polarisable support.

The micromachined non-polarisable layer may consist of a regular array of open regions in circular form, their size ranging from some 50nm to 500µm in diameter. Arrays of such apertures may take the form of regular hexagons or squares, etc. Single open regions may also be utilised and in this case the opening would again range from 50nm to 500µm in diameter. The open region or regions function as electrically polarisable interfaces through which ionic species transfer from the sample phase into the polarisable material. Definition of the film aperture geometries allows careful control of ion transfer flux into the composite membrane and hence the form and magnitude of the current response of the chemical sensors and detectors incorporating membranes according to the invention.

The polarisable material preferably consists of a matrix polymer which may be solely hydrophobic or have at least a substantial degree of hydrophobicity. The polarisable materials also preferably contains a solvent with plasticising properties with low water miscibility and possessing low vapour pressure. One preferred formulation for the polarisable material comprises polyvinylchloride with o-nitrophenyloctylether as plasticiser or solvent and Bis(triphenylphosphoranylidene) ammonium tetrakis(4-chlorophenylborate) electrolytic species.

In addition to the ion permeable properties, the polarisable material should have good processability, in particular the ability to adhere well to the non-polarisable layer and the ability to form stable films on that layer. For analytical purposes the material should have a sensitive and rapid response to selected ions in a sample, with good stability over the test lifetime.

The non-polarisable support is preferably composed of a polymeric film-forming material with adequate mechanical stability, low water absorption characteristics and excellent insulating properties. Such materials are usually less than 100µm in film thickness, and function as an electrically insulating surface. A wide range of commercially available film plastics with varying degrees of surface hydrophobic character may be used. Poly(ethylene terephthalate) is a suitable film material, possessing very good laser machining properties and high volume resistivity. Its excellent adherence to laminated materials allows it to be chemically functionalised and amenable to UV laser surface texturing and hydrophilisation.

Film compositions may vary depending on the processing conditions (for example whether they are formed by means of thermal, IR or UV curing procedures). Polystyrenes can be used for example to form a thin film covering over the hydroghobic layer: for example a formulation consisting of polystyrene dissolved in isophorone and applied to a surface by the methods of extrusion coating, casting from solvents, spread filming, spray coating, ink-jet printing or screen printing and cured at low temperature forms a film with excellent dielectric and UV photoablative properties.

The formulation for the non-polarisable material may include one or more chemical reagents in order to provide a specific chemical sensor function, for example, sensors for clinical diagnostic testing. Such reagents may include enzyme substrates or enzymes. For instance, enzymes such as urease, creatinine deiminase, glutamate dehydrogenase or phenylalanine deaminase, etc. could be incorporated as part of or attached to the non-polarisable polymer component in order to provide specific clinical tests for urea, creatinine, glutamate or phenylalanine respectively.

A composite membrane with bound enzymes is shown schematically in Figure 3 for the analysis of enzyme substrates. Here, the enzymes 22 are bound to the non-polarisable layer and the enzyme-catalysed reaction producing the species to be detected is indicated by reference numeral 24. As an alternative to bound enzymes, the enzymes could be added to the test sample, for example as a dry reagent. The system could also be arranged for the analysis of enzyme concentrations where the substrate of a target enzyme is added to the test sample as a dry reagent and the enzyme quantitated by the production of selective ion transferable species.

Illustrated in figure 4 is a composite membrane functionalised with antibody reagents, which is suitable for use in immunochemical reactions and analysis. Antibodies 26 bound to the non-polarisable layer capture antigen-enzyme conjugates. The captured enzyme undergoes reaction 28, producing the species to be detected. Affinity composite membranes of this type may be used for example in enzyme immunoassays with flow instrumentation.

Formatted as chemical sensing probes, composite membranes according to the invention can be adapted to the general laboratory analysis of ionic species and biochemicals. Figure 5 is a diagrammatic representation of the features of a typical probe, in which the composite membrane 30 is contained in a replaceable tip connector 32. Internal electrolyte (gel or solution) is added to the recess between the composite membrane 34 and a suitable internal reference electrode. An external reference electrode 36 is also fitted and positioned on an exposed region on the external surface of the main body of the probe 38, so as to come into contact with a sample into which the probe is placed.

In the membranes illustrated in Figures 1, 3, 4 and 7, the polarisable layer overlies the non-polarisable layer, and also substantially fills the apertures in the non-polarisable layer. Though this geometry has been found to perform well in tests, it is by no means essential, and may readily be varied according to the requirements of the individual application for which the membrane is intended, and/or of the manufacturing process. For example, it may in a number of cases be more convenient to manufacture a membrane in which the apertured non-polarisable layer simply overlies the polarisable layer, and the polarisable layer does not extend into the apertures to any substantial extent. Such an arrangement is illustrated in Figure 10. Alternatively or additionally the non-polarisable layer may be covered by a protective layer, for example of an aqueous gel, to inhibit membrane fouling and improve sensor performance in flow systems (see Figure 11). Preferred aqueous gels include polyacrylamide, polyvinylalcohol and hydroxyethylcellulose.

A yet further alternative is illustrated in Figure 12, in which the polarisable material passes through the apertures to cover both sides of the non-polarisable layer, so that the non-polarisable layer is effectively embedded within the polarisable layer. In such an arrangement, the thickness of the polarisable layer on the sample side of the polarisable layer should be less than the characteristic diameter of the microapertures, in order to avoid distortions to the well defined current flow provided by the presence of the microapertures. Figure 13 illustates an arrangement in which the non-polarisable layer is coated with a metallic layer (for example of gold, platinum or silver), so as to act either as a counter electrode (as indicated by CE2 in Figure 7), or as a reference electrode (as indicated by RE2 in Figure 7). In the latter case, the material of the coating is preferably anodised silver, for example AgCl, AgSO₄ or silver tetraphenylborate.

Other alternative geometries are feasible, the only essential requirement being the provision of an arrangement in which the ion flux through the sample/membrane interface (indicated by the arrows in Figures 10 to 13) is restricted to one or more well defined regions of the polarisable layer defined by one or more corresponding apertures in the non-polarisable layer.

The composite membranes of the invention are likely to have wide applications in clinical diagnostics. They may be designed to sense many species of clinical and environmental interest: polarisable membrane formulations are envisaged for K⁺-responsive membranes, Na⁺-responsive membrane, Ca²⁺-responsive membranes, Cl⁻-responsive membranes, NH₄⁺-responsive membranes, Pb²⁺-responsive membranes, Cd²⁺-responsive membranes, Zn²⁺-responsive membranes and Cu²⁺-responsive membranes, among others. Ion sensing agents such crown ethers, heterocyclic antibiotics, carbazone ligands (eg valinomycin for K⁺) and diphenylcarbazone (for Pb²⁺ and other heavy metals) may be incorporated into the ion sensitive layer, depending on the analyte of interest. As an example of a clinical test, Figure 6 depicts a voltammogram obtained from a composite membrane used to sense and quantitate choline. Electrochemical sensors can be constructed from composite membranes according to the invention for the detection and quantification of a wide range of blood analytes, which exhibit diminished blood matrix interferences of the type commonly encountered with conventional amperometric devices.

### Reference list

[1] T.M.Cahh, Biosensors, Chapman and Hall, London, 1993
[2] J.Koryta, Ion-selective electrodes, Eds J.W.Linnett and J.H.Purnell, Cambridge University Press, Cambridge, 1975
[3] T.Osakai, T.Kakutani and M.Senda, Bunseki Kagaku ., 33(1984)E371
[4] T.Osakai, T.Kakutani and M.Senda, Anal.Sci., 3(1987)529
[5] T,Osakai, T.Kakutani and M.Senda, Anal.Sci., 4(1988)529
[6] M.Senda, European Patent Application, 94101146.2(1994)
[7] V.Marecek, H.Janchenova, M.P.Colombini and P.Papoff, J.Electroanal.Chem., 217(1987)213
[8] S.Wilke and R.Pricht, Anal.Chim.Acta., 291(1994)41
[9] S.Wilke, Anal.Chim.Acta., 295(1994)165
[10] S.Wilke, H.Franzke and H.Muller, Anal.Chim.Acta., 268(1992)285
[11] M.D.Osborne and H.H.Girault, Electroanalysis., 7(1995)714
[12] Y.Shao, M.D.Osborne and H.H.Girault, J.Electroanal.Chem., 318(1991)101
0 [13] M.D.Osborne, Y.Shao, C.M.Pereira and H.H.Girault, J.Electroanal.Chem., 364(1994)155
[14] M.D.Osborne and H.H.Girault, Mikrochim.Acta., 117(1995)175

## Claims

1. A micromachined ion permeable composite membrane (10; 30) comprising: a non-polarisable layer (14; 62; 66; 74) having at least one microaperature formed there through; and an electrically polarisable material (12, 16; 60; 68; 72) comprising a polymer matrix, into which a predetermined ionic species (18) is capable of entering, the polarisable material being disposed in relation to said at least one microaperature so as to provide a passageway of well defined cross-sectional area for said predetermined ionic species through the interface between the composite membrane and a sample (17) with which the membrane is placed in contact.

2. A micromachined ion permeable composite membrane according to claim 1, wherein the polymer matrix is substantially hydrophobic in nature.

3. A micromachined ion permeable composite membrane according to claim 2, wherein the polymer matrix is of poly(vinyl chloride).

4. A micromachined ion permeable composite membrane according to any preceding claim, wherein the polarisable material comprises an organic solvent.

5. A micromachined ion permeable composite membrane according to claim 4, wherein the solvent is sparingly soluble in water, typically less than 5% in weight.

6. A micromachined ion permeable composite membrane according to claim 5, wherein the solvent is o-nitrophenyloctyl ether.

7. A micromachined ion permeable composite membrane according to any preceding claim, wherein the polarisable material comprises a hydrophobic electrolytic substance.

8. A micromachined ion permeable composite membrane according to claim 7, wherein the hydrophobic electrolytic substance is Bis(triphenylphosphoranylidene) ammonium tetrakis (4-chlorophenylborate).

9. A micromachined ion permeable composite membrane according to any preceding claim, wherein the polarisable material further comprises an ion-complexing phase transfer species.

10. A micromachined ion permeable composite membrane according to claim 9, wherein the ion complexing phase transfer species is a ligand capable of complexation with a target ion within the sample and driving the target ion into the polarisable part of the composite membrane.

11. A micromachined ion permeable composite membrane according to claim 10, wherein the non polarisable material is a polyester (e.g. poly (ethylene terephthalate) ) or a vinyl polymer (e.g. polystyrene).

12. A micromachined ion permeable composite membrane according to any preceding claim, wherein the non-polarisable layer is subjected to laser hydophilisation.

13. A micromachined ion permeable composite membrane according to any preceding claim, wherein enzymes or antibodies (22; 26) are attached to the non-polarisable layer in the vicinity of the at least one micro aperture.

14. A micromachined ion permeable composite membrane according to any preceding claim, wherein said at least one micro aperture is formed by laser photoablation.

15. A micromachined ion permeable composite membrane according to any preceding claim, wherein the membrane possesses a single micro aperture, having a diameter of less than 500µm and more than 50nm.

16. A micromachined ion permeable composite membrane according to any of claims 1 to 15, wherein the membrane possesses an array of micro apertures.

17. A micromachined ion permeable composite membrane according to claim 16, wherein each micro aperture has a diameter of less than 500µm and more than 50nm.

18. An ion detector comprising a micromachined ion permeable composite membrane according to any preceding claim, wherein polarisation is achieved by two electrodes (RE1,RE2), one placed on each side of the membrane, the mode of detection being amperometric monitoring of the ion flux through the microaperture.

19. An ion detector according to claim 18, for use in flow injection analysis and/or chromatography.

20. A disposable ion detection apparatus comprising a micromachined ion permeable composite membrane according to any of claims 1 to 17, the membrane being directly mounted on a support arrangement.

21. An ammonia sensor comprising a micromachined ion permeable composite membrane according to any of claims 1 to 17, the membrane being covered by an ion-free hydrophilic layer and a gas permeable membrane, e.g. Teflon (poly(tetrafluoroethylene)).

22. A sensor as claimed in 21 for use in detecting urea and/or creatinine.

23. A micromachined ion permeable composite membrane according to any of claims 1 to 17, wherein the polarisable material comprises enzymes, enzyme substrates, enzyme cofactors or the like (22).

24. A heavy metal ion sensor comprising: a micromachined ion permeable composite membrane according to any of claims 1 to 17; or an ion detector according to claim 18 or claim 19.

## Patentansprüche

1. Mikromaschinell gefertigte, ionendurchlässige Kompositmembran (10; 30), **dadurch gekennzeichnet, dass** sie die folgenden Bestandteile aufweist: eine nicht polarisierbare Schicht (14; 62, 66; 74) mit zumindest einer dahindurchgeformten Mikroöffnung sowie ein elektrisch polarisierbares Material (12, 16; 60; 68; 70) mit einer Polymermatrix, in die eine vorbestimmte Ionenspezies (18) eindringen kann, wobei das polarisierbare Material im Verhältnis zu besagter zumindest einen Mikroöffnung derart angeordnet ist, dass eine Durchtrittsöffnung mit einem gut definierten Querschnittsbereich für besagte vorbestimmte Ionenspezies gebildet wird durch die Schnittstelle zwischen der Kompositmembran und einer Probe (17), mit der die Membran in Kontakt gebracht wird.

2. Mikromaschinell gefertigte, ionendurchlässige Kompositmembran nach Anspruch 1, **dadurch gekennzeichnet, dass** die Polymermatrix im Wesentlichen hydrophobischer Natur ist.

3. Mikromaschinell gefertigte, ionendurchlässige Kompositmembran nach Anspruch 2, **dadurch gekennzeichnet, dass** die Polymermatrix aus Poly(vinylchlorid) besteht.

4. Mikromaschinell gefertigte, ionendurchlässige Kompositmembran nach einem der vorstehenden Ansprüche, **dadurch gekennzeichnet, dass** das polarisierbare Material ein organisches Lösungsmittel aufweist.

5. Mikromaschinell gefertigte, ionendurchlässige Kompositmembran nach Anspruch 4, **dadurch gekennzeichnet, dass** das Lösungsmittel nur schwer in Wasser löslich ist, typischerweise weniger als 5 Gewichtsprozente.

6. Mikromaschinell gefertigte, ionendurchlässige Kompositmembran nach Anspruch 5, **dadurch gekennzeichnet, dass** es sich bei dem Lösungsmittel um o-Nitrophenyl-Octylether handelt.

7. Mikromaschinell gefertigte, ionendurchlässige Kompositmembran nach einem der vorstehenden Ansprüche, **dadurch gekennzeichnet, dass** das polarisierbare Material eine hydrophobische elektrolytische Substanz aufweist.

8. Mikromaschinell gefertigte, ionendurchlässige Kompositmembran nach Anspruch 7, **dadurch gekennzeichnet, dass** es sich bei der hydrophobischen elektrolytischen Substanz um Bis(triphenylphosphor anyliden) Ammoniak tetrakis (4-Chlorophenyl Borat) handelt.

9. Mikromaschinell gefertigte, ionendurchlässige Kompositmembran nach einem der vorstehenden Ansprüche, **dadurch gekennzeichnet, dass** das polarisierbare Material des Weiteren eine ionenkomplexierende Phasentransferspezie aufweist.

10. Mikromaschinell gefertigte, ionendurchlässige Kompositmembran nach Anspruch 9, **dadurch gekennzeichnet, dass** es sich bei der ionenkomplexierenden Phasentransferspezie um einen Liganden handelt, der in der Lage ist, mit einem Zielion innerhalb der Probe zu komplexieren und das Zielion in den polarisierbaren Teil der Kompositmembran zu überführen.

11. Mikromaschinell gefertigte, ionendurchlässige Kompositmembran nach Anspruch 10, **dadurch gekennzeichnet, dass** es sich bei dem nicht polarisierbaren Material um einen Polyester (beispielsweise Poly (ethylenterephthalat) oder ein Vinylpolymer (beispielsweise Polystyrol) handelt.

12. Mikromaschinell gefertigte, ionendurchlässige Kompositmembran nach einem der vorstehenden Ansprüche, **dadurch gekennzeichnet, dass** die nicht polarisierbare Schicht mit Hilfe eines Lasers einer Hydrophilisierung unterzogen wird.

13. Mikromaschinell gefertigte, ionendurchlässige Kompositmembran nach einem der vorstehenden Ansprüche, **dadurch gekennzeichnet, dass** Enzyme oder Antikörper (22; 26) mit der nicht polarisierbaren Schicht in der Nähe der zumindest einen Mikroöffnung verbunden werden.

14. Mikromaschinell gefertigte, ionendurchlässige Kompositmembran nach einem der vorstehenden Ansprüche, **dadurch gekennzeichnet, dass** besagte zumindest eine Mikroöffnung mit Hilfe von Laser-Photoablation geformt wird.

15. Mikromaschinell gefertigte, ionendurchlässige Kompositmembran nach einem der vorstehenden Ansprüche, **dadurch gekennzeichnet, dass** die Membran eine einzige Mikroöffnung mit einem Durchmesser von weniger als 500 µm und mehr als 50 nm aufweist.

16. Mikromaschinell gefertigte, ionendurchlässige Kompositmembran nach einem der Ansprüche 1 bis 15, **dadurch gekennzeichnet, dass** die Membran eine Vielzahl von Mikroöffnungen aufweist.

17. Mikromaschinell gefertigte, ionendurchlässige Kompositmembran nach Anspruch 16, **dadurch gekennzeichnet, dass** jede Mikroöffnung einen Durchmesser von weniger als 500 µm und mehr als 50 nm aufweist.

18. Ionensensor mit einer mikromaschinell gefertigten, ionendurchlässigen Kompositmembran nach einem der vorstehenden Ansprüche, **dadurch gekennzeichnet, dass** die Polarisierung mit Hilfe von zwei Elektroden (RE1; RE2) bewerkstelligt wird, wobei jeweils eine Elektrode auf einer der beiden Seiten der Membrane positioniert wird und wobei die Detektion mit Hilfe von amperometrischer Überwachung des Ionenflusses durch die Mikroöffnung erfolgt.

19. Ionensensor nach Anspruch 18 zum Einsatz bei der Fließinjektionsanalyse und/oder Chromatographie.

20. Einweg-Ionendetektionsappaparat mit einer mikromaschinell gefertigten, ionendurchlässigen Kompositmembran nach einem der Ansprüche 1 bis 17, **dadurch gekennzeichnet, dass** die Membran direkt auf einem Stützarrangement montiert wird.

21. Ammoniaksensor mit einer mikromaschinell gefertigten, ionendurchlässigen Kompositmembran nach einem der Ansprüche 1 bis 17, **dadurch gekennzeichnet, dass** die Membran von einer ionenfreien hydrophilen Schicht und einer gasdurchlässigen Membran wie z.B. Teflon (Poly(tetrafluorethylen)) abgedeckt wird.

22. Sensor nach Anspruch 21 zum Einsatz bei der Detektion von Harnstoff und/oder Kreatinin.

23. Mikromaschinell gefertigte, ionendurchlässige Kompositmembran nach einem der Ansprüche 1 bis 17, **dadurch gekennzeichnet, dass** das polarisierbare Material Enzyme, Enzymsubstrate, Enzym-Kofaktoren oder dergleichen (22) aufweist.

24. Schwermetall-Ionensensor mit entweder einer mikromaschinell gefertigten, ionendurchlässigen Kompositmembran nach einem der Ansprüche 1 bis 17 oder einem Ionendetektor nach Anspruch 18 oder Anspruch 19.

## Revendications

1. Membrane composite perméable aux ions, micro-usinée (10 ; 30), comprenant : une couche non polarisable (14 ; 62 ; 66 ; 74) percée d'au moins une micro-ouverture ; et un matériau polarisable électriquement (12, 16 ; 60 ; 68 ; 72) comprenant une matrice de polymère, dans lequel une espèce ionique prédéterminée (18) est capable de pénétrer, le matériau polarisable étant placé par rapport à ladite au moins une micro-ouverture de manière à fournir un passage de section droite bien définie pour ladite espèce ionique prédéterminée à travers l'interface entre la membrane composite et un échantillon (17) avec lequel la membrane est mise en contact.

2. Membrane composite perméable aux ions, micro-usinée, selon la revendication 1, dans laquelle la matrice de polymère est de nature essentiellement hydrophobe.

3. Membrane composite perméable aux ions, micro-usinée, selon la revendication 2, dans laquelle la matrice de polymère est en poly(chlorure de vinyle).

4. Membrane composite perméable aux ions, micro-usinée, selon l'une quelconque des revendications précédentes, dans laquelle le matériau polarisable comprend un solvant organique.

5. Membrane composite perméable aux ions, micro-usinée, selon la revendication 4, dans laquelle le solvant est peu soluble dans l'eau, typiquement à raison de moins de 5% en poids.

6. Membrane composite perméable aux ions, micro-usinée, selon la revendication 5, dans laquelle le solvant est un éther o-nitrophényloctylique.

7. Membrane composite perméable aux ions, micro-usinée, selon l'une quelconque des revendications précédentes, dans laquelle le matériau polarisable comprend une substance électrolytique hydrophobe.

8. Membrane composite perméable aux ions, micro-usinée, selon la revendication 7, dans laquelle la substance électrolytique hydrophobe est le tétrakis(4-chlorophénylborate) de bis(triphénylphosphoranylidène)-ammonium.

9. Membrane composite perméable aux ions, micro-usinée, selon l'une quelconque des revendications précédentes, dans laquelle le matériau polarisable comprend en outre une espèce de transfert de phase complexant les ions.

10. Membrane composite perméable aux ions, micro-usinée, selon la revendication 9, dans laquelle l'espèce de transfert de phase complexant les ions est un ligand capable de se complexer avec un ion cible au sein de l'échantillon et d'entraîner l'ion cible dans la partie polarisable de la membrane composite.

11. Membrane composite perméable aux ions, micro-usinée, selon la revendication 10, dans laquelle le matériau non polarisable est un polyester (par exemple du poly(téréphtalate d'éthylène)) ou un polymère vinylique (par exemple du polystyrène).

12. Membrane composite perméable aux ions, micro-usinée, selon l'une quelconque des revendications précédentes, dans laquelle la couche non polarisable est soumise à une hydrophilisation au laser.

13. Membrane composite perméable aux ions, micro-usinée, selon l'une quelconque des revendications précédentes, dans laquelle des enzymes ou des anticorps (22 ; 26) sont fixés à la couche non polarisable au voisinage de ladite au moins une micro-ouverture.

14. Membrane composite perméable aux ions, micro-usinée, selon l'une quelconque des revendications précédentes, dans laquelle ladite au moins une micro-ouverture est formée par photoablation au laser.

15. Membrane composite perméable aux ions, micro-usinée, selon l'une quelconque des revendications précédentes, dans laquelle la membrane possède une seule micro-ouverture, dont le diamètre est inférieur à 500 µm et supérieur à 50 nm.

16. Membrane composite perméable aux ions, micro-usinée, selon l'une quelconque des revendications 1 à 15, dans laquelle la membrane possède un réseau de micro-ouvertures.

17. Membrane composite perméable aux ions, micro-usinée, selon la revendication 16, dans laquelle chaque micro-ouverture possède un diamètre inférieur à 500 µm et supérieur à 50 nm.

18. Détecteur d'ions comprenant une membrane composite perméable aux ions, micro-usinée, selon l'une quelconque des revendications précédentes, dans lequel la polarisation est réalisée par deux électrodes (RE1, RE2), placées de part et d'autre de la membrane, le mode de détection étant un contrôle ampérométrique du flux ionique à travers la micro-ouverture.

19. Détecteur d'ions selon la revendication 18, à utiliser en analyse par injection en continu et/ou en chromatographie.

20. Appareil de détection d'ions à jeter après usage comprenant une membrane composite perméable aux ions, micro-usinée, selon l'une quelconque des revendications 1 à 17, la membrane étant montée directement sur un dispositif de support.

21. Détecteur d'ammoniac comprenant une membrane composite perméable aux ions, micro-usinée, selon l'une quelconque des revendications 1 à 17, la membrane étant couverte d'une couche hydrophile sans ions et d'une membrane perméable aux gaz, par exemple du Téflon (polytétrafluoroéthylène).

22. Détecteur selon la revendication 21 à utiliser pour détecter l'urée et/ou la créatinine.

23. Membrane composite perméable aux ions, micro-usinée, selon l'une quelconque des revendications 1 à 17, dans laquelle le matériau polarisable comprend des enzymes, des substrats d'enzymes, des co-facteurs d'enzymes, ou analogues (22).

24. Détecteur d'ions de métaux lourds comprenant : une membrane composite perméable aux ions, micro-usinée, selon l'une quelconque des revendications 1 à 17, ou un détecteur d'ions selon la revendication 18 ou la revendication 19.
